# EUROPÄISCHE PATENTSCHRIFT

(11) **EP 3 048 200 B1**
(45) Veröffentlichungstag und Bekanntmachung des Hinweises auf die Patenterteilung: **04.10.2017**
(21) Anmeldenummer: 16000100.4
(22) Anmeldetag: 16.01.2016
(51) Int. Cl.: E01H 1/08, A01G 1/12

(54) **BLASGERÄT**
BLOWING DEVICE
APPAREIL DE SOUFFLAGE

(30) Priorität: 21.01.2015 DE 102015000732
(43) Veröffentlichungstag der Anmeldung: 27.07.2016
(73) Patentinhaber: Andreas Stihl AG & Co. KG, 71336 Waiblingen (DE)
(72) Erfinder: Barth, Christian, D-71404 Korb (DE); Hittmann, Markus, D-71384 Weinstadt (DE); Gindele, Cornelius, D-73207 Plochingen (DE)
(74) Vertreter: Reinhardt, Annette

(56) Entgegenhaltungen:
- WO-A1-2014/030755
- WO-A2-2012/136906
- DE-U1-202014 100 753

## Beschreibung

Die Erfindung betrifft ein Blasgerät der im Oberbegriff des Anspruchs 1 angegebenen Gattung.

Aus der WO 2012/136906 A2 ist ein handgeführtes Blasgerät bekannt, dessen Blasrohr gerade ausgebildet ist. Im Blasrohr ist ein Gebläse angeordnet, das einen Luftstrom durch das Blasrohr fördert. Das Blasgerät besitzt einen oberhalb des Blasrohrs angeordneten Handgriff. Der Bediener muss im Betrieb am Handgriff sowohl die Gewichtskraft des Blasgeräts als auch die von dem austretenden Blasluftstrom erzeugte Rückstoßkraft aufnehmen.

Der Erfindung liegt die Aufgabe zugrunde, ein Blasgerät der gattungsgemäßen Art zu schaffen, bei dem die im Betrieb vom Bediener aufzunehmende Kraft verringert ist.

Diese Aufgabe wird durch ein Blasgerät mit den Merkmalen des Anspruchs 1 gelöst.

Im Betrieb verlässt der Luftstrom das Blasrohr an einer Blasrohröffnung in einer Ausströmrichtung. Die von dem Luftstrom erzeugte Rückstoßkraft wirkt in Gegenrichtung zur Ausströmrichtung an der Blasrohröffnung. Der Abstand der Mittelachse der Blasrohröffnung zu einem senkrecht über dem Schwerpunkt liegenden Griffpunkt übt ein Moment auf das Blasgerät aus, das vom Bediener aufzunehmen ist. Es ist vorgesehen, dass der Abstand der Mittelachse der Blasrohröffnung zum Griffpunkt kleiner ist als der Abstand der Gebläseachse zum Griffpunkt. Dadurch, dass die Mittelachse der Blasrohröffnung zum Griffpunkt einen kleineren Abstand besitzt als die Gebläseachse zum Griffpunkt, wird das von der Rückstoßkraft erzeugte Moment gegenüber einer Anordnung, bei der der Abstand der Mittelachse der Blasrohröffnung zum Griffpunkt dem Abstand der Gebläseachse zum Griffpunkt entspricht, verringert. Gleichzeitig ist es möglich, das Gebläse unterhalb des Griffpunkts anzuordnen, so dass sich eine günstige Lage des Schwerpunkts ergibt.

Bevorzugt verläuft die Mittelachse der Blasrohröffnung in Arbeitslage unter dem Griffpunkt. Das von der Rückstoßkraft ausgeübte Drehmoment wirkt dadurch im Betrieb in Richtung einer Bewegung der Blasrohröffnung in Arbeitslage nach unten. Diesem Drehmoment wirkt die Umlenkung des Blasluftstroms aus der Richtung der Gebläseachse in die Ausströmrichtung entgegen, so dass sich insgesamt eine weitere Verringerung des vom Bediener abzustützenden Moments ergibt. Der Winkel, den die Mittelachse der Blasrohröffnung mit der Gebläseachse einschließt, beträgt vorteilhaft mindestens 3°, insbesondere mindestens 5°. Als besonders vorteilhaft hat sich ein Winkel zwischen 5° und 20°, insbesondere von etwa 10° herausgestellt. Der Luftstrom aus dem Gebläse strömt vorteilhaft in einer Gebläseausströmrichtung aus, die parallel zur Gebläseachse verläuft. Das Blasrohr besitzt zweckmäßig einen Umlenkabschnitt, in dem die Strömungsrichtung von der Strömungsrichtung an der Gebläseausströmöffnung in die Ausströmrichtung aus dem Blasrohr umgelenkt wird. Um eine möglichst geringe Beeinträchtigung des Blasluftstroms durch die Umlenkung im Umlenkabschnitt zu erreichen, ist vorgesehen, dass das Blasrohr in dem Umlenkabschnitt gebogen verläuft. Die Blasleistungsverluste durch den Umlenkabschnitt können dadurch gering gehalten werden.

Um ein Aufsetzen unterschiedlicher Düsen auf das Blasrohr zu ermöglichen, ist vorgesehen, dass das Blasrohr einen geraden Abschnitt aufweist. Der Umlenkabschnitt ist in Strömungsrichtung bevorzugt zwischen dem geraden Abschnitt und dem Gebläse angeordnet. Die Länge des geraden Abschnitts ist dabei mindestens halb so groß wie die Länge des Umlenkabschnitts. Bevorzugt ist die Länge des geraden Abschnitts mindestens so groß wie die Länge des Umlenkabschnitts. Bevorzugt ist die Länge des geraden Abschnitts größer als die Länge des Umlenkabschnitts. Dadurch tritt der Blasluftstrom aus dem Blasrohr in Richtung des geraden Abschnitts aus. Wird ein geneigter Luftaustritt gewünscht, kann auf das Blasrohr zusätzlich eine Umlenkdüse aufgesetzt werden. Dadurch, dass der Umlenkabschnitt zwischen dem geraden Abschnitt und dem Gebläse angeordnet ist, lässt sich ein vergleichsweise geringer Abstand der Mittelachse der Blasrohröffnung zum Griffpunkt erreichen. Gleichzeitig bleibt ausreichend Raum für die Hand eines Bedieners, um den Handgriff im Bereich des Griffpunkts zu greifen. Bevorzugt schließt der Umlenkabschnitt an die stromab liegende Stirnseite des Gebläses an. Die stromab liegende Stirnseite des Gebläses liegt dabei an der stromab liegenden Seite eines Gebläserads oder Leitrads des Gebläses.

Vorteilhaft ist der Handgriff in Arbeitslage oberhalb des Gebläses angeordnet. Eine günstige Anordnung einer Luftansaugöffnung ergibt sich, wenn das Gebläse den Luftstrom über einen Ansaugkanal ansaugt, dessen Längsmittelachse mit der Gebläseachse einen Winkel einschließt, der größer als 0° ist. Der Winkel zwischen der Längsmittelachse des Ansaugkanals und der Gebläseachse beträgt vorteilhaft von 0,5° bis 10°.

Das Blasgerät besitzt vorteilhaft ein starres Gehäuse, an dem das Blasrohr und der Handgriff ausgebildet sind und in dem die Gebläseeinheit angeordnet ist. An dem starren Gehäuse ist bevorzugt auch die Ausblasöffnung aus dem Blasrohr vorgesehen. Die Lage von Handgriff, Blasrohr und Gebläseeinheit zueinander ist dadurch konstruktiv fest vorgegeben und kann durch den Bediener nicht geändert werden. Die Gebläseeinheit umfasst vorteilhaft einen Antriebsmotor, der als Elektromotor ausgebildet und in dem Blasrohr angeordnet ist. Dadurch ergibt sich ein kompakter Aufbau. Durch die Anordnung des Elektromotors in dem Blasrohr ist gleichzeitig das vom Bediener am Handgriff zu tragende Gewicht des Blasgeräts gegenüber Blasgeräten, die einen an einer Rückentrage angeordneten Antriebsmotor aufweisen, vergleichsweise hoch, so dass die Verringerung des durch die Rückstoßkraft des Blasluftstroms ausgeübten Moments am Handgriff für den Bediener besonders vorteilhaft ist.

Um in jeder Arbeitslage des Blasgeräts eine ergonomische Ausrichtung des Handgriffs zu erreichen, ist vorgesehen, dass der Handgriff einen ersten Abschnitt und einen zweiten Abschnitt aufweist, wobei die Längsmittelachse des ersten Abschnitts mit der Längsmittelachse des zweiten Abschnitts einen Winkel einschließt, der größer als 0° ist. Der Winkel zwischen der Längsmittelachse des ersten Abschnitts und der Längsmittelachse des zweiten Abschnitts beträgt bevorzugt von etwa 15° bis etwa 45°. Der näher an der Blasrohröffnung angeordnete erste Abschnitt schließt mit der Mittelachse der Blasrohröffnung einen ersten Winkel ein, und der von der Blasrohröffnung weiter entfernte zweite Abschnitt schließt mit der Mittelachse der Blasrohröffnung einen zweiten Winkel ein. Der erste Winkel ist bevorzugt kleiner als der zweite Winkel. Dadurch ergibt sich eine ergonomische Bedienung. Der Handgriff ist in dem im Betrieb weiter hinten liegenden Bereich stärker zur Mittelachse der Blasrohröffnung geneigt als in dem im Betrieb vorne liegenden Abschnitt. Der erste Winkel und der zweite Winkel öffnen dabei zu der im Betrieb vorne liegenden, der Blasrohröffnung zugewandten Seite. Bei nach unten geneigter Blasrohröffnung wird dadurch eine horizontale oder leicht nach vorne und oben geneigte Ausrichtung des vom Bediener gegriffenen Abschnitts des Handgriffs erreicht. Dadurch ergibt sich eine ergonomische Anordnung. Der Bediener greift den Handgriff dabei vorteilhaft im vorderen, ersten Abschnitt, wenn der Blasluftstrom auf einen weiter entfernt liegenden Bereich gerichtet werden soll, und im hinteren, zweiten Abschnitt, wenn der Blasluftstrom auf einen in unmittelbarer Nähe des Bedieners liegenden Bereich zu richten ist.

An dem Handgriff ist vorteilhaft mindestens ein Bedienelement angeordnet. Um für jede Lage des Blasgeräts eine ergonomische Handhaltung und eine gute Erreichbarkeit des Bedienelements zu gewährleisten, kann vorgesehen sein, dass die Längsmittelachse des Handgriffs in dem Längsabschnitt des Handgriffs, in dem das Bedienelement angeordnet ist, mit der Mittelachse der Blasrohröffnung einen Winkel von etwa 20° bis etwa 45° einschließt. Der Handgriff ist dabei vorteilhaft über seine gesamte Länge gerade ausgebildet, so dass die Längsmittelachse des Handgriffs über die gesamte Länge des Handgriffs eine Gerade bildet. Als besonders vorteilhaft hat sich ein Winkel von etwa 30° bis etwa 40°, bevorzugt etwa 35° herausgestellt.

Ausführungsbeispiele der Erfindung werden im Folgenden anhand der Zeichnung erläutert. Es zeigen:
- Fig. 1: eine Seitenansicht eines Blasgeräts,
- Fig. 2: einen Schnitt durch das Blasgerät aus Fig. 1,
- Fig. 3: den Bereich der Gebläseeinheit des Blasgeräts aus den Figuren 1 und 2 in vergrößerter Schnittdarstellung,
- Fig. 4: eine vereinfachte Schnittdarstellung des Blasgeräts entsprechend Fig. 2 ohne eine am Blasrohr angeordnete Düse,
- Fig. 5: eine Schnittdarstellung durch ein Ausführungsbeispiel eines Blasgeräts in einer Darstellung entsprechend Fig. 5,
- Fig. 6: eine Seitenansicht eines Ausführungsbeispiels eines Gebläses eines Blasgeräts.

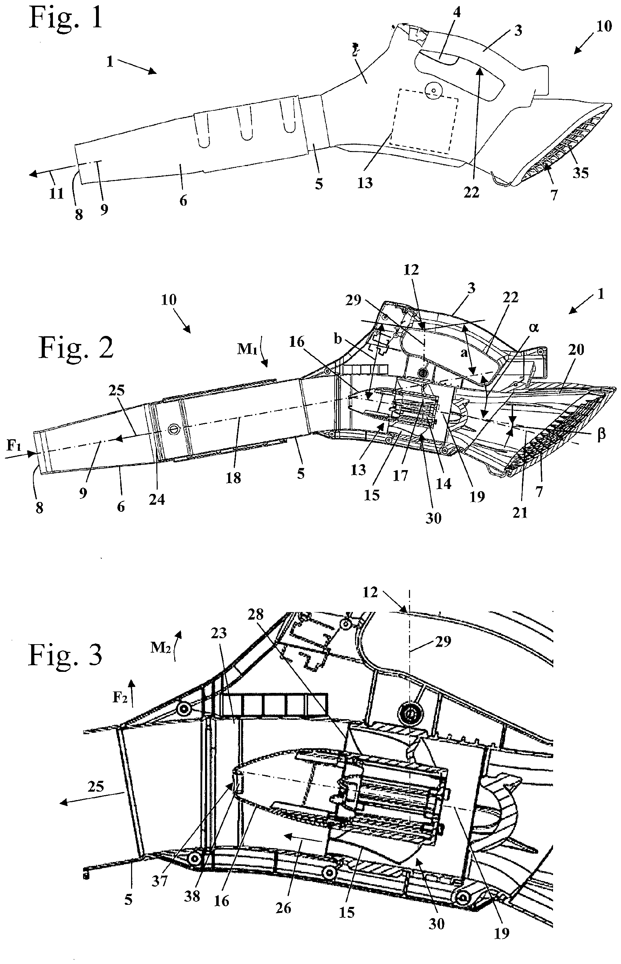

Fig. 1 zeigt ein handgeführtes, handgetragenes Blasgerät 1 in einer Arbeitslage 10. Das Blasgerät 1 dient beispielsweise dazu, Laub oder dergleichen von Wegen und Rasenflächen zu entfernen. Hierzu wird das Blasgerät 1 vom Bediener in einer Lage gehalten, die etwa der in Fig. 1 gezeigten Arbeitslage 10 entspricht, und aus dieser Lage so verschwenkt, dass eine Ausblasöffnung 8 sich in etwa horizontaler Richtung und/oder in etwa vertikaler Richtung bewegt. Das Blasgerät 1 besitzt ein Gehäuse 2 aus starrem Material, beispielsweise aus formstabilem Kunststoff. An dem Gehäuse 2 sind ein Handgriff 3 sowie ein Blasrohr 5 ausgebildet, die Bestandteil des Gehäuses 2 sind. An dem Blasrohr 5 ist eine Düse 6 abnehmbar gehalten. An der Düse 6 ist eine Ausblasöffnung 8 ausgebildet, durch die ein vom Blasgerät 1 geförderter Blasluftstrom das Blasgerät 1 in einer Ausblasrichtung 11 verlässt. Die Düse 6 kann vom Bediener ausgetauscht werden, um die Ausblasrichtung zu ändern und eine gewünschte Ausblasrichtung 11 aus dem Blasgerät 1 zu erhalten.

Im Gehäuse 2 ist eine Gebläseeinheit 13 angeordnet, die in Fig. 1 schematisch dargestellt ist und die den Blasluftstrom fördert. Am Handgriff 3 ist ein Bedienelement 4 zur Bedienung der Gebläseeinheit 13 angeordnet. Zur Ansaugung der Luft ist eine Ansaugöffnung 7 vorgesehen, die von einem Gitter 35 abgedeckt ist. Der Handgriff 3 besitzt eine in Arbeitslage 10 nach unten gewandte, der Gebläseeinheit 13 zugewandte Unterseite 22.

Fig. 2 zeigt den Aufbau des Blasgeräts 1 im Einzelnen. Die Gebläseeinheit 13 umfasst einen im Blasrohr 5 angeordneten Antriebsmotor 14 und ein Gebläse 30. Das Gebläse 30 umfasst im Ausführungsbeispiel ein von dem Antriebsmotor 14 angetriebenes, im Blasrohr 5 angeordnetes Gebläserad 15. Das Gebläse 30 kann auch mehrere Gebläseräder und/oder ein oder mehrere zusätzliche Leiträder umfassen. Die Gebläseeinheit 13 umfasst außerdem eine nicht gezeigte Steuerung, die außerhalb des Blasrohrs 5 angeordnet sein kann. Die Gebläseeinheit 13 besitzt eine Gebläseachse 19, die der Drehachse des Gebläserads 15 entspricht. Die Gebläseachse 19 fällt mit der Längsmittelachse des Blasrohrs 5 im Bereich des Gebläses 30 zusammen. Stromab des Gebläserads 15 ist ein Leitelement 16 angeordnet, das in Form eines gebogenen Kegels zuläuft und dessen Außendurchmesser sich in Strömungsrichtung verringert. Am Außenumfang des Antriebsmotors 14 und des Leitelements 16 ist ein Ringraum ausgebildet, in dem die Flügel des Gebläserads 15 angeordnet sind und durch den die Luft im Betrieb gefördert wird.

Das Gebläse 30 fördert den Blasluftstrom in Richtung der Gebläseachse 19. Das Gebläse 30 ist demnach ein Axial- oder ein Diagonalgebläse. Im Ausführungsbeispiel ist das Gebläse 30 als Axialgebläse ausgebildet.

Das Blasgerät 1 besitzt einen Schwerpunkt 17, der im Ausführungsbeispiel im Bereich des Antriebsmotors 14 angeordnet ist. Der Handgriff 3 besitzt an seiner Unterseite 22 einen Griffpunkt 12, der auf einer vertikalen Achse 29 durch den Schwerpunkt 17 liegt. Die Achse 29 ist dabei in Arbeitslage 10 vertikal angeordnet, wenn ein Bediener das Blasgerät 1 am Handgriff 3 hält.

Die Düse 6 ist auf das Blasrohr 5 aufgesetzt und übergreift das Blasrohr 5 dabei. Das Blasrohr 5 besitzt eine Blasrohröffnung 24, an der die Luft aus dem Blasrohr 5 austritt und in die Düse 6 eintritt. Der Luftstrom verlässt das Blasrohr 5 durch die Blasrohröffnung 24 in einer Ausströmrichtung 25. Im Ausführungsbeispiel liegt die Ausströmrichtung 25 in Richtung einer Längsmittelachse 18 des Blasrohrs 5 an der Blasrohröffnung 24. Die Blasrohröffnung 24 besitzt eine Mittelachse 9, die in Ausströmrichtung 25 ausgerichtet ist und durch die geometrische Mitte der Blasrohröffnung 24 verläuft. Die Mittelachse 9 besitzt zum Griffpunkt 12 einen Abstand a. Wie Fig. 2 zeigt, ist das Blasrohr 5 stromab des Gebläses 30 gebogen ausgeführt. Die Gebläseachse 19 besitzt aufgrund der Biegung des Blasrohrs 5 einen Abstand b zum Griffpunkt 12, der größer als der Abstand a ist. Der Abstand b beträgt vorteilhaft mindestens 110%, vorteilhaft mindestens 120%, insbesondere mehr als 130% des Abstands a.

Die aus dem Blasgerät 1 durch die Ausblasöffnung 8 ausströmende Arbeitsluft erzeugt eine Rückstoßkraft F₁. Die Rückstoßkraft F₁ übt aufgrund des Abstands a zwischen der Mittelachse 9 und dem Griffpunkt 12 ein Moment M₁ um den Griffpunkt 12 aus, das in Richtung einer Bewegung der Ausblasöffnung 8 nach unten wirkt. Dieses Moment M₁ ist umso kleiner, je kleiner der Abstand a ist.

Wie Fig. 2 zeigt, schließt die Mittelachse 9 mit der Gebläseachse 19 einen Winkel α ein. Der Winkel α beträgt mehr als 0°, insbesondere mindestens 3°, vorzugsweise mindestens 5°. Als besonders vorteilhaft hat sich ein Winkel α von etwa 10° herausgestellt. Der Winkel α ist dabei vorteilhaft kleiner als 20°. Dadurch wird eine zu starke Umlenkung des Blasluftstroms vermieden. Die Ansaugöffnung 7 ist mit der stromauf liegenden Seite des Gebläses 30 über einen Ansaugkanal 20 verbunden. Der Ansaugkanal 20 besitzt eine Längsmittelachse 21, die gegenüber der Gebläseachse 19 ebenfalls geneigt ist. Die Längsmittelachse 21 schließt mit der Gebläseachse 19 einen Winkel β ein, der mehr als 0° beträgt. Der Winkel β kann beispielsweise etwa 0,5° bis 10° betragen. Die Längsmittelachse 21 des Ansaugkanals 20 verläuft dabei vom Gebläse 30 ausgehend entgegen der Strömungsrichtung, also zur Ansaugöffnung 7 hin, in Arbeitslage 10 nach unten.

Wie Fig. 3 zeigt, ist an der stromab liegenden Stirnseite 28 des Gebläses 30 ein Umlenkabschnitt 23 des Blasrohrs 5 angeordnet. Im Ausführungsbeispiel ist das Leitelement 16 im Umlenkabschnitt 23 angeordnet. Das Leitelement 16 besitzt eine stromab liegende Stirnseite 37. Die Stirnseite 37 weist eine Öffnung 38 auf, die zur Ansaugung von Kühlluft für den Antriebsmotor 14 dient. Wie Fig. 3 zeigt, ist die Öffnung 38 benachbart zur Gebläseachse 19 angeordnet, wird aber im Ausführungsbeispiel nach Fig. 3 von der Gebläseachse 19 nicht geschnitten.

Der Blasluftstrom verlässt das Gebläse 30 an der stromab liegenden Stirnseite des Gebläses 30 in einer Gebläseausströmrichtung 26. Der Umlenkabschnitt 23 verläuft im Ausführungsbeispiel bogenförmig. Im Umlenkabschnitt 23 wird die Strömungsrichtung des Blasluftstroms von der Gebläseausströmrichtung 26 in die Ausströmrichtung 25 aus der Blasrohröffnung 24 (Fig. 2) umgelenkt. Durch die gleichmäßige Krümmung des Umlenkabschnitts 23 sind die Blasleistungsverluste durch die Umlenkung dabei vergleichsweise gering. Die Stirnseite 28 ist dabei die stromab liegende Stirnseite des Gebläserads 15. Umfasst das Gebläse 30 zusätzlich Leiträder, ist die Stirnseite 28 die stromab liegende Seite des stromab liegenden Gebläserads oder Leitrads. Aufgrund der Umlenkung der Strömungsrichtung von der Gebläseausströmrichtung 26 zur Ausströmrichtung 25 übt der Blasluftstrom auf das Blasrohr 5 eine Umlenkkraft F₂ aus. Die Umlenkkraft F₂ bewirkt am Griffpunkt 12 ein Moment M₂, das dem Moment M₁ (Fig. 2) entgegengerichtet ist. Durch den Umlenkabschnitt 23 wird dadurch das am Griffpunkt 12 wirkende, vom Bediener aufzunehmende Moment zusätzlich verringert.

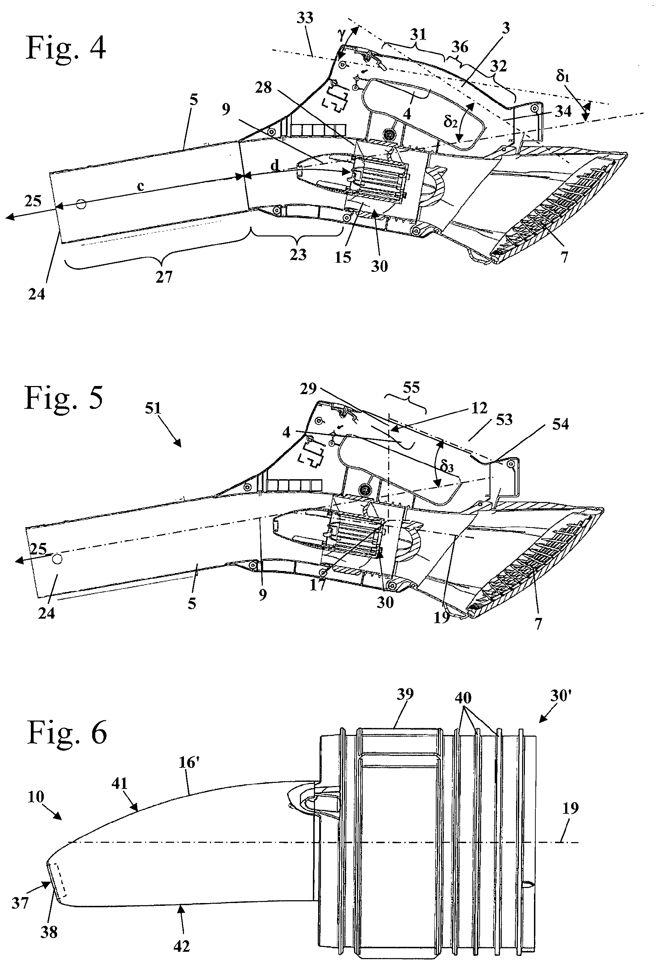

Wie Fig. 4 zeigt, schließt in Strömungsrichtung an den Umlenkabschnitt 23 ein gerader Abschnitt 27 an. Der Umlenkabschnitt 23 besitzt eine mittig im Umlenkabschnitt 23 und in Strömungsrichtung gemessene Länge d. Die Länge c des geraden Abschnitts 27 ist mindestens halb so groß, insbesondere mindestens gleich groß wie die Länge d. Auch die Länge c ist dabei mittig und in Strömungsrichtung im geraden Abschnitt 27 gemessen. Im Ausführungsbeispiel ist die Länge c des geraden Abschnitts 27 größer als die Länge d. Die Länge c ist dabei von der stromab liegenden Stirnseite des Umlenkabschnitts 23 bis zur Blasrohröffnung 24 gemessen.

Fig. 4 zeigt auch die Gestaltung des Handgriffs 3 im Einzelnen. Der Handgriff 3 besitzt einen ersten Abschnitt 31 sowie einen zweiten Abschnitt 32. Die Abschnitte 31 und 32 sind jeweils näherungsweise gerade ausgebildet und über einen bogenförmigen Bereich 36 miteinander verbunden. Der erste Abschnitt 31 besitzt eine Längsmittelachse 33, die mit der Mittelachse 9 der Blasrohröffnung 24 einen ersten Winkel δ₁ einschließt. Der Winkel δ₁ beträgt vorteilhaft von etwa 10° bis etwa 30°. Im Ausführungsbeispiel ist ein Winkel δ₁ vorgesehen, der zwischen 15° und 25° beträgt.

Der zweite Abschnitt 32 des Handgriffs 3 besitzt eine Längsmittelachse 34, die mit der Mittelachse 9 der Blasrohröffnung 24 einen zweiten Winkel δ₂ einschließt. Der Winkel δ₂ ist größer als der Winkel δ₁ und kann beispielsweise von 25° bis 65° betragen. Im Ausführungsbeispiel ist ein Winkel δ₂ vorgesehen, der zwischen 40° und 50° liegt. Der erste Abschnitt 31 ist dabei näher an der Blasrohröffnung 24 angeordnet als der zweite Abschnitt 32. Der zweite Abschnitt 32 liegt näher an der Ansaugöffnung 7 als der erste Abschnitt 31. Am ersten Abschnitt 31 ist das Bedienelement 4 angeordnet. Die beiden Abschnitte 31 und 32 sind zueinander geneigt. Die beiden Längsmittelachsen 33 und 34 schließen einen Winkel γ ein, der von etwa 15° bis etwa 45° beträgt. Der Winkel γ beträgt insbesondere von etwa 25° bis etwa 35°.

Dadurch, dass der bezogen auf den Bediener vorne liegende, erste Abschnitt 31 zur Mittelachse 9 der Blasrohröffnung 24 weniger geneigt ist als der bezogen auf den Bediener hinten liegende, zweite Abschnitt 32, ergibt sich eine ergonomische Bedienung. Möchte der Bediener den Blasluftstrom auf einen weiter entfernt liegenden Punkt richten, so kann er den Handgriff 3 am ersten Abschnitt 31 greifen. Durch die vergleichsweise geringe Neigung des ersten Abschnitts 31 wird bei flach austretendem Blasluftstrom eine ergonomische Handhaltung erreicht. Möchte der Bediener den Blasluftstrom auf einen näher liegenden Punkt richten, so kann er den Handgriff 3 am zweiten Abschnitt 32 greifen. Das Blasgerät wird dabei aus der in Fig. 4 gezeigten Lage entgegen dem Uhrzeigersinn verschwenkt, so dass sich eine ergonomische, nur geringfügig zur Horizontalen geneigte Lage des zweiten Abschnitts 32 bei steiler nach unten gerichteter Ausströmrichtung 25 ergibt.

Fig. 5 zeigt ein Blasgerät 51, das einen Handgriff 53 besitzt. Der Aufbau des Blasgeräts 51 entspricht im Wesentlichen dem des Blasgeräts 1 aus den vorangegangenen Figuren. Gleiche Bezugszeichen kennzeichnen in allen Figuren einander entsprechende Elemente. Der Handgriff 53 ist über seine gesamte Länge im Wesentlichen gerade ausgebildet. Der Handgriff 53 besitzt eine Längsmittelachse 54, die mit der Mittelachse 9 der Blasrohröffnung 24 einen Winkel δ₃ einschließt. Der Winkel δ₃ beträgt vorteilhaft von etwa 20° bis etwa 45°, insbesondere von etwa 30° bis etwa 40°. Als besonders vorteilhaft wird ein Winkel δ₃ angesehen, der zwischen 30° und 35° liegt. Der Handgriff 53 besitzt einen Längsabschnitt 55, an dem das Bedienelement 4 gelagert ist. Auch am Längsabschnitt 55 verläuft die Längsmittelachse 54 des Handgriffs 53 gerade. Der Winkel δ₃ liegt zwischen den Winkeln δ₁ und δ₂ des Blasgeräts 1. Dadurch ergibt sich sowohl für eine Lage des Blasgeräts 51, bei der der Blasluftstrom auf einen weiter entfernt liegenden Bereich gerichtet ist, als auch für eine Lage, bei der der Blasluftstrom auf einen nahe am Bediener liegenden Bereich gerichtet ist, eine ergonomische Handhaltung. Dabei kann die Hand des Bedieners für jede Arbeitslage im Längsabschnitt 55 angeordnet werden, so dass das Bedienelement 4 immer gut für den Bediener greifbar ist.

Fig. 6 zeigt ein Ausführungsbeispiel eines Gebläses 30', das anstatt des Gebläses 30 bei einem Blasgerät 1, 51 zum Einsatz kommen kann. Einander entsprechende Elemente sind mit gleichen Bezugszeichen bezeichnet wie in den vorangegangenen Figuren. Das Gebläse 30' besitzt einen Blasrohrabschnitt 39, an dessen Außenseite Versteifungsrippen 40 zur Erhöhung der Stabilität des Gebläses 30' angeordnet sind. Am Gebläse ist ein Leitelement 16' angeordnet, das im Wesentlichen dem Leitelement 16 aus den vorangegangenen Figuren entspricht. Das Leitelement 16' ist allerdings stärker gekrümmt als das Leitelement 16. Das Leitelement 16' besitzt eine Oberseite 41, die in Arbeitslage 10 nach oben weist, sowie eine Unterseite 42, die in Arbeitslage 10 nach unten weist. Die Oberseite 41, die Unterseite 42 und die Gebläseachse 19 liegen in einer Ebene. Die Gebläseachse 19 schneidet im Ausführungsbeispiel nach Fig. 6 die Oberseite 41 und besitzt zur Öffnung 38 in der Stirnseite 37 einen Abstand. Die Unterseite 42 ist in Strömungsrichtung von der Gebläseachse 19 weg gekrümmt. Die Unterseite 42 kann auch näherungsweise eben verlaufen, wobei sich der Abstand zur Gebläseachse 19 in Strömungsrichtung vorteilhaft vergrößert.

Die Krümmung des Leitelements 16, 16' ist an die Biegung des Blasrohrs 5 angepasst. Die Krümmung ist dabei auch abhängig vom Abstand des Gebläses 30, 30' zum Umlenkabschnitt 23 (Fig. 4). Mit zunehmendem Abstand des Gebläses 30, 30' zum Umlenkabschnitt 23 fällt die Krümmung dabei vorteilhaft geringer aus. Je näher das Gebläse 30, 30' am Umlenkabschnitt 23 angeordnet ist, umso stärker ist das Leitelement 16, 16' vorteilhaft gekrümmt. Das Leitelement 16' ist in Strömungsrichtung länger ausgebildet als das Leitelement 16. Das Leitelement 16' ist vorteilhaft näher am Umlenkabschnitt 23 angeordnet als das Leitelement 16 und deshalb stärker gekrümmt als das Leitelement 16.

## Patentansprüche

1. Blasgerät, mit einem Blasrohr (5), mit einer Gebläseeinheit (13), die im Betrieb einen Luftstrom durch das Blasrohr (5) fördert, wobei die Gebläseeinheit (13) ein Gebläse (30, 30') mit einer Gebläseachse (19) besitzt, wobei das Gebläse (30, 30') ein den Luftstrom in Richtung der Gebläseachse (19) förderndes Gebläse (30, 30') ist, und wobei der Luftstrom an einer Blasrohröffnung (24) in einer Ausströmrichtung (25) aus dem Blasrohr (5) strömt, und mit einem Handgriff (3, 53), der eine dem Gebläse (30, 30') zugewandte Unterseite (22) besitzt, wobei der Handgriff (3, 53) an seiner Unterseite (22) einen Griffpunkt (12) besitzt, der in Arbeitslage (10) des Blasgeräts (1) auf einer vertikalen Achse (29) durch den Schwerpunkt (17) des Blasgeräts (1) liegt, und wobei die Blasrohröffnung (24) eine in Ausströmrichtung (25) ausgerichtete Mittelachse (9) besitzt,
**dadurch gekennzeichnet, dass** der Abstand (a) der Mittelachse (9) der Blasrohröffnung (24) zum Griffpunkt (12) kleiner ist als der Abstand (b) der Gebläseachse (19) zum Griffpunkt (12).

2. Blasgerät nach Anspruch 1,
**dadurch gekennzeichnet, dass** die Mittelachse (9) der Blasrohröffnung (24) in Arbeitslage (10) unter dem Griffabschnitt (12) verläuft.

3. Blasgerät nach Anspruch 1 oder 2,
**dadurch gekennzeichnet, dass** die Mittelachse (9) der Blasrohröffnung (24) einen Winkel (α) mit der Gebläseachse (19) einschließt, der mindestens 3° beträgt.

4. Blasgerät nach einem der Ansprüche 1 bis 3,
**dadurch gekennzeichnet, dass** der Luftstrom aus dem Gebläse (30, 30') in einer Gebläseausströmrichtung (26) ausströmt, die parallel zur Gebläseachse (19) verläuft, und dass das Blasrohr (5) einen Umlenkabschnitt (23) aufweist, in dem die Strömungsrichtung von der Gebläseausströmrichtung (26) in die Ausströmrichtung (25) aus dem Blasrohr (5) umgelenkt wird.

5. Blasgerät nach Anspruch 4,
**dadurch gekennzeichnet, dass** das Blasrohr (5) in dem Umlenkabschnitt (23) gebogen verläuft.

6. Blasgerät nach Anspruch 4 oder 5,
**dadurch gekennzeichnet, dass** das Blasrohr (5) einen geraden Abschnitt (27) aufweist, wobei der Umlenkabschnitt (23) in Strömungsrichtung zwischen dem geraden Abschnitt (27) und dem Gebläse (30, 30') angeordnet ist, wobei die Länge (c) des geraden Abschnitts (27) mindestens halb so groß ist wie die Länge (d) des Umlenkabschnitts (23) ist.

7. Blasgerät nach einem der Ansprüche 4 bis 6,
**dadurch gekennzeichnet, dass** der Umlenkabschnitt (23) an die stromab liegende Stirnseite (28) des Gebläses (30, 30') anschließt.

8. Blasgerät nach einem der Ansprüche 1 bis 7,
**dadurch gekennzeichnet, dass** der Handgriff (3, 53) in Arbeitslage (10) oberhalb des Gebläses (30, 30') angeordnet ist.

9. Blasgerät nach einem der Ansprüche 1 bis 8,
**dadurch gekennzeichnet, dass** das Gebläse (30, 30') den Luftstrom über einen Ansaugkanal (20) ansaugt, dessen Längsmittelachse (21) mit der Gebläseachse (19) einen Winkel (β) einschließt, der größer als 0° ist.

10. Blasgerät nach einem der Ansprüche 1 bis 9,
**dadurch gekennzeichnet, dass** das Blasgerät (1) ein starres Gehäuse (2) besitzt, an dem das Blasrohr (5) und der Handgriff (3, 53) ausgebildet sind, und in dem die Gebläseeinheit (13) angeordnet ist.

11. Blasgerät nach einem der Ansprüche 1 bis 10,
**dadurch gekennzeichnet, dass** die Gebläseeinheit (13) einen Antriebsmotor (14) umfasst, der als Elektromotor ausgebildet und der in dem Blasrohr (5) angeordnet ist.

12. Blasgerät nach einem der Ansprüche 1 bis 11,
**dadurch gekennzeichnet, dass** der Handgriff (3) einen ersten Abschnitt (31) und einen zweiten Abschnitt (32) aufweist, wobei die Längsmittelachse (33) des ersten Abschnitts (31) mit der Längsmittelachse (34) des zweiten Abschnitts (32) einen Winkel (γ) einschließt, der größer als 0° ist.

13. Blasgerät nach Anspruch 12,
**dadurch gekennzeichnet, dass** der Winkel (γ) zwischen der Längsmittelachse (33) des ersten Abschnitts (31) und der Längsmittelachse (34) des zweiten Abschnitts (32) von etwa 15° bis etwa 45° beträgt.

14. Blasgerät nach Anspruch 12 oder 13,
**dadurch gekennzeichnet, dass** der näher an der Blasrohröffnung (24) angeordnete erste Abschnitt (31) mit der Mittelachse (9) der Blasrohröffnung (24) einen ersten Winkel (δ₁) einschließt, dass der von der Blasrohröffnung (24) weiter entfernte zweite Abschnitt (32) mit der Mittelachse (9) der Blasrohröffnung (24) einen zweiten Winkel (δ₂) einschließt, und dass der erste Winkel (δ₁) kleiner als der zweite Winkel (δ₂) ist.

15. Blasgerät nach einem der Ansprüche 1 bis 14,
**dadurch gekennzeichnet, dass** an dem Handgriff (53) mindestens ein Bedienelement (4) angeordnet ist, und dass die Längsmittelachse (54) des Handgriffs (53) in dem Längsabschnitt (55), in dem das Bedienelement (4) angeordnet ist, mit der Mittelachse (9) der Blasrohröffnung (24) einen Winkel (δ₃) von etwa 20° bis etwa 45° einschließt.

## Claims

1. Blower assembly, having a blow tube (5), having a blower unit (13), which conveys an air stream through the blow tube (5) during operation, wherein the blower unit (13) has a blower (30, 30') with a blower axis (19), wherein the blower (30, 30') is a blower (30, 30') conveying the air stream in the direction of the blower axis (19), and wherein the air stream flows at a blow tube opening (24) in a discharge direction (25) out of the blow tube (5), and having a handle (3, 53), which has an underside (22) facing the blower (30, 30'), wherein the handle (3, 53) has a grip point (12) on its underside (22), wherein the grip point (12) lies, in the working position (10) of the blower assembly (1), on a vertical axis (29) through the centre of gravity (17) of the blower assembly (1), and wherein the blow tube opening (24) has a centre axis (9) oriented in the discharge direction (25),
**characterised in that** the distance (a) of the centre axis (9) of the blow tube opening (24) to the grip point (12) is smaller than the distance (b) of the blower axis (19) to the grip point (12).

2. Blower assembly according to claim 1,
**characterised in that** the centre axis (9) of the blow tube opening (24) extends, in the working position (10), below the grip portion (12).

3. Blower assembly according to claim 1 or 2,
**characterised in that** the centre axis (9) of the blow tube opening (24) is at an angle (α) in relation to the blower axis (19), which is at least 3°.

4. Blower assembly according to one of claims 1 to 3,
**characterised in that** the air stream flows out of the blower (30, 30') in a blower discharge direction (26), which extends parallel to the blower axis (19), and the blow tube (5) has a deflection portion (23), in which the flow direction is deflected from the blower discharge direction (26) into the discharge direction (25) out of the blow tube (5).

5. Blower assembly according to claim 4,
**characterised in that** the blow tube (5) extends in a curved manner in the deflection portion (23).

6. Blower assembly according to claim 4 or 5,
**characterised in that** the blow tube (5) has a straight portion (27), wherein the deflection portion (23) is arranged in the flow direction between the straight portion (27) and the blower (30, 30'), wherein the length (c) of the straight portion (27) is at least half of the length (d) of the deflection portion (23).

7. Blower assembly according to one of claims 4 to 6,
**characterised in that** the deflection portion (23) is attached to the end face (28), arranged downstream, of the blower (30, 30').

8. Blower assembly according to one of claims 1 to 7,
**characterised in that** the handle (3, 53) is arranged, in the working position (10), above the blower (30, 30').

9. Blower assembly according to one of claims 1 to 8,
**characterised in that** the blower (30, 30') draws the air stream via a suction channel (20), of which the central longitudinal axis (21) is at an angle (β), in relation to the blower axis (19), which is greater than 0°.

10. Blower assembly according to one of claims 1 to 9,
**characterised in that** the blower assembly (1) has a rigid housing (2), on which the blow tube (5) and the handle (3, 53) are formed, and in which the blower unit (13) is arranged.

11. Blower assembly according to one of claims 1 to 10,
**characterised in that** the blower unit (13) has a drive motor (14), which is designed as an electric motor and which is arranged in the blow tube (5).

12. Blower assembly according to one of claims 1 to 11,
**characterised in that** the handle (3) has a first portion (31) and a second portion (32), wherein the central longitudinal axis (33) of the first portion (31) is at an angle (γ), in relation to the central longitudinal axis (34) of the second portion (32), which is greater than 0°.

13. Blower assembly according to claim 12,
**characterised in that** the angle (γ) between the central longitudinal axis (33) of the first portion (31) and the central longitudinal axis (34) of the second portion (32) is approximately 15° to approximately 45°.

14. Blower assembly according to claim 12 or 13,
**characterised in that** the first portion (31), proximate to the blow tube opening (24), is at a first angle (δ₁), in relation to the centre axis (9) of the blow tube opening (24), the second portion (32), remote from the blow tube opening (24), is at a second angle (δ₂), in relation to the centre axis (9) of the blow tube opening (24), and the first angle (δ₁) is smaller than the second angle (δ₂).

15. Blower assembly according to one of claims 1 to 14,
**characterised in that** at least one operating element (4) is arranged on the handle (53), and the central longitudinal axis (54) of the handle (53) in the longitudinal portion (55), in which the operating element (4) is arranged, is at an angle (δ₃), in relation to the centre axis (9) of the blow tube opening (24), of approximately 20° to approximately 45°.

## Revendications

1. Appareil de soufflage avec un tube de soufflage (5), une unité de soufflante (13) qui, en fonctionnement, refoule un courant d'air par le tube de soufflage (5), l'unité de soufflante (13) comportant une soufflante (30, 30') avec un axe de soufflante (19), la soufflante (30, 30') étant une soufflante (30, 30') qui refoule le courant d'air dans le sens de l'axe de soufflante (19), le courant d'air sortant du tube de soufflage (5) par une ouverture de tube de soufflage (24) dans un sens d'évacuation (25), et avec une poignée (3, 53) qui présente un côté inférieur (22) tourné vers la soufflante (30, 30'), la poignée (3, 53) présentant sur son côté inférieur (22) un point de préhension (12) qui, dans la position de travail (10) de l'appareil de soufflage (1), est situé sur un axe vertical (29) qui traverse le centre de gravité (17) de l'appareil de soufflage (1), et l'ouverture de tube de soufflage (24) présentant un axe médian (9) dirigé dans le sens d'évacuation (25),
**caractérisé en ce que** la distance (a) entre l'axe médian (9) de l'ouverture de tube de soufflage (24) et le point de préhension (12) est plus petite que la distance (b) entre l'axe de soufflante (19) et ledit point de préhension (12).

2. Appareil de soufflage selon la revendication 1,
**caractérisé en ce que** l'axe médian (9) de l'ouverture de tube de soufflage (24), dans la position de travail (10), s'étend sous la section de préhension (12).

3. Appareil de soufflage selon la revendication 1 ou 2,
**caractérisé en ce que** l'axe médian (9) de l'ouverture de tube de soufflage (24) définit avec l'axe de soufflante (19) un angle (α) qui est d'au moins 3°.

4. Appareil de soufflage selon l'une des revendications 1 à 3,
**caractérisé en ce que** le courant d'air sort de la soufflante (30, 30') dans un sens de sortie de soufflante (26) qui est parallèle à l'axe de soufflante (19), et **en ce que** le tube de soufflage (5) comporte une section de déviation (23) dans laquelle le sens d'écoulement est dévié, à partir du sens de sortie de soufflante (26), dans le sens de sortie (25) du tube de soufflage (5).

5. Appareil de soufflage selon la revendication 4,
**caractérisé en ce que** le tube de soufflage (5) est courbe dans la section de déviation (23).

6. Appareil de soufflage selon la revendication 4 ou 5,
**caractérisé en ce que** le tube de soufflage (5) comporte une section droite (27), la section de déviation (23) étant disposée dans le sens d'écoulement entre la section droite (27) et la soufflante (30, 30'), la longueur (c) de la section droite (27) étant égale à au moins la moitié de la longueur (d) de la section de déviation (23).

7. Appareil de soufflage selon l'une des revendications 4 à 6,
**caractérisé en ce que** la section de déviation (23) fait suite au côté frontal (28) de la soufflante (30, 30') situé en aval.

8. Appareil de soufflage selon l'une des revendications 1 à 7,
**caractérisé en ce que** la poignée (3, 53), dans la position de travail (10), est disposée au-dessus de la soufflante (30, 30').

9. Appareil de soufflage selon l'une des revendications 1 à 8,
**caractérisé en ce que** la soufflante (30, 30') aspire le courant d'air par un conduit d'aspiration (20) dont l'axe longitudinal médian (21) définit avec l'axe de soufflante (19) un angle (β) qui est supérieur à 0°.

10. Appareil de soufflage selon l'une des revendications 1 à 9,
**caractérisé en ce que** l'appareil de soufflage (1) comporte un boîtier rigide (2) sur lequel sont formés le tube de soufflage (5) et la poignée (3, 53), et dans lequel est disposée l'unité de soufflante (13).

11. Appareil de soufflage selon l'une des revendications 1 à 10,
**caractérisé en ce que** l'unité de soufflante (13) comprend un moteur d'entraînement (14) qui est conçu comme un moteur électrique et qui est disposé dans le tube de soufflage (5).

12. Appareil de soufflage selon l'une des revendications 1 à 11,
**caractérisé en ce que** la poignée (3) comporte une première section (31) et une seconde section (32), l'axe longitudinal médian (33) de la première section (31) définissant avec l'axe longitudinal médian (34) de la seconde section (32) un angle (γ) qui est supérieur à 0°.

13. Appareil de soufflage selon la revendication 12,
**caractérisé en ce que** l'angle (γ) entre l'axe longitudinal médian (33) de la première section (31) et l'axe longitudinal médian (34) de la seconde section (32) est d'environ 15° à environ 45°.

14. Appareil de soufflage selon la revendication 12 ou 13,
**caractérisé en ce que** la première section (31), plus proche de l'ouverture de tube de soufflage (24), définit avec l'axe médian (9) de ladite ouverture de tube de soufflage (24) un premier angle (δ₁), et **en ce que** la seconde section (32), plus éloignée de l'ouverture de tube de soufflage (24), définit avec l'axe médian (9) de ladite ouverture de tube de soufflage (24), un deuxième angle (δ₂), et **en ce que** le premier angle (δ₁) est plus petit que le deuxième angle (δ₂).

15. Appareil de soufflage selon l'une des revendications 1 à 14,
**caractérisé en ce qu'**il est prévu sur la poignée (53) au moins un élément de commande (4), et **en ce que** l'axe longitudinal médian (54) de la poignée (53), dans la section longitudinale (55) dans laquelle est disposé l'élément de commande (4), définit avec l'axe médian (9) de l'ouverture de tube de soufflage (24) un angle (δ₃) d'environ 20° à environ 45°.
